Europäisches Patentamt

European Patent Office

Office européen des brevets

(19)

(11) Numéro de publication : **0 487 391 A1**

## (12) DEMANDE DE BREVET EUROPEEN

(21) Numéro de dépôt : **91403087.9**

(22) Date de dépôt : **18.11.91**

(51) Int. Cl.⁵ : **H04B 10/24, G02B 6/42**

(30) Priorité : **19.11.90 FR 9014359**

(43) Date de publication de la demande :
**27.05.92 Bulletin 92/22**

(84) Etats contractants désignés :
**DE FR GB IT SE**

(71) Demandeur : **AUTOMOBILES PEUGEOT**
**75, avenue de la Grande Armée**
**F-75116 Paris (FR)**
(71) Demandeur : **AUTOMOBILES CITROEN**
**62 Boulevard Victor-Hugo**
**F-92200 Neuilly-sur-Seine (FR)**

(72) Inventeur : **Chazallet**
**24, Boulevard National**
**F-13001 Marseille (FR)**
Inventeur : **Dequenne, Michel**
**10, Rue de la Belle Epine**
**F-78650 Beynes (FR)**

(74) Mandataire : **Fabien, Henri**
**PEUGEOT SA. DAT / BPI 18, rue des Fauvelles**
**F-92250 La Garenne-Colombes (FR)**

(54) **Module émetteur-récepteur optique bi-directionnel à plusieurs voies et répéteur optique utilisant ce module.**

(57) Le module comporte par exemple deux voies d'émission de signaux (S1,S3) et deux voies de réception de signaux (S2,S4) sur une fibre optique (FOP1). On dispose dans un même boîtier (1) plusieurs diodes électro-luminescentes (D11, D13) et plusieurs photo-détecteurs (Ph12,Ph14). Des filtres interférentiels (F11,F12,F13,F14) permettent de réparer ou de mélanger plusieurs longueurs d'onde.

Application au multiplexage optique.

FIG. 4

EP 0 487 391 A1

Jouve, 18, rue Saint-Denis, 75001 PARIS

L'invention a principalement pour objet un module émetteur-récepteur optique à plusieurs voies relié à une fibre optique.

Elle a également pour objet un répéteur optique bi-directionriel à plusieurs voies interposé sur une fibre optique.

La transmission simultanée, dans une même fibre optique, de signaux provenant de plusieurs sources lumineuses de longueurs d'onde différentes exige de multiplexer et démultiplexer au moins deux longueurs d'onde.

A cet effet, il est connu de faire appel à des filtres interférentiels ou dichroïques dont la propriété essentielle est de laisser passer le rayonnement d'une longueur d'onde donnée et de réfléchir tous les autres rayonnements.

Un module émetteur-récepteur de signaux optiques transmis par au moins une fibre optique selon l'invention est donc du type comportant des filtres interférentiels ou dichroïques pour séparer les radiations lumineuses de longueurs d'onde différentes.

Pour minimiser le nombre de composants, il est tentant d'associer un même filtre dichroïque Fi d'une part à une diode électro-luminescente Di et d'autre part à un récepteur photo-électrique Phi pour l'émission et pour la réception d'un rayonnement de longueur d'onde $\Gamma i$. Mais le spectre d'émission des diodes électro-luminescentes étant large, le flux émis non transmis par le filtre est réfléchi vers le récepteur, ce qui engendre une erreur systématique nécessitant une correction dans l'exploitation du signal électrique. Il est de plus nécessaire d'utiliser des filtres de surface suffisante pour séparer les voies d'émission et de réception au prix d'une perte de compacité du système.

Pour remédier aux inconvénients ci-dessus, l'invention propose des dispositifs modulaires dans lesquels l'émission et la réception sont spatialement séparées.

A cet effet un module selon l'invention se caractérise en ce qu'il comporte des moyens pour émettre au moins deux signaux. optiques (S1,S3) et recevoir au moins deux signaux optiques (S2,S4) de longueurs d'onde différentes sur une même fibre optique, ($\Gamma 1,\Gamma 3$) pour les signaux émis (S1,S3) et ($\Gamma 2,\Gamma 4$) pour les signaux reçus (S2,S4), ces moyens comprenant au moins:
  – pour l'émission deux diodes électro-luminescentes (D11,D13) de spectres centrés sur ($\Gamma 1,\Gamma 3$) et deux filtres dichroïques (F11,F13) laissant passer les radiations de longueur d'onde ($\Gamma 1,\Gamma 3$) et réfléchissant les autres;
  – pour la réception deux récepteurs photo-électriques (Ph12,Ph14), respectivement associés à des filtres dichroïques (F12,F14) laissant passer les radiations de longueurs d'ondes ($\Gamma 2,\Gamma 4$) et réfléchissant les autres;
  – les trajets optiques de l'ensemble de ces signaux (S2,S3,S4) moins l'un d'entre eux (S1) comportant une réflexion sur au moins un filtre dichroïque laissant passer l'un au moins des autres signaux.

De préférence, les filtres interférentiels en nombre pair sont partagés en deux groupes égaux disposés dans deux plans parallèles de sorte que le chemin optique du faisceau lumineux provenant de la fibre passe alternativement d'un plan à l'autre par réflexions successives.

Avantageusement l'angle d'incidence $\alpha$ des signaux optiques sur les filtres dichroïques est voisin de 25°.

Selon une autre caractéristique de l'invention les diodes électro-luminescentes occupent les positions les plus proches de la fibre optique alors que les récepteurs occupent les positions les plus éloignées de la fibre optique.

Selon une forme de réalisation qui est particulièrement intéressante un module émetteur-récepteur selon l'invention comporte au moins deux voies d'émission de signaux S1,S3 de longueurs d'onde $\Gamma 1,\Gamma 3$ et le même nombre de voies de réception de signaux S2,S4 de longueurs d'onde $\Gamma 2,\Gamma 4$, les longueurs d'onde étant choisies de façon à imbriquer les longueurs d'onde des voies d'émission et de réception avec la relation $\Gamma 4 > \Gamma 3 > \Gamma 2 > \Gamma 1$.

On peut bien entendu inverser les longueurs d'onde d'émission et de réception, $\Gamma 1$ et $\Gamma 3$ devenant les longueurs d'onde de réception.

Selon une autre caractéristique, les diodes électro-luminescentes Dij, les filtres dichroïques Fij, les récepteurs photo-électriques Phij, les lentilles Lij sont maintenus en place dans des empreintes formées en creux dans deux demi-coquilles formant le boîtier du module.

Selon une autre caractéristique, les signaux optiques se propagent dans un canal à plusieurs branches ménagé en creux à l'intérieur des deux demi-coquilles et comportant une branche rectiligne pour chaque voie d'émission ou de réception.

Dans ce dernier cas il est avantageux que chaque branche 1C1-1C4,2C1-2C4 possède d'une part un confluent avec au moins une branche adjacente et débouche d'autre part dans une empreinte 1CN destinée au logement d'une nappe à fils conducteurs reliée d'une part à une prise multibroche et d'autre part par paire aux émetteurs et aux récepteurs.

Un répéteur optique bi-directionnel à plusieurs voies selon l'invention se caractérise en ce qu'il comporte deux modules émetteur-récepteur du type ci-dessus, disposés ou non dans un même boîtier, ne différant l'un de l'autre que par l'inversion des longueurs d'onde des signaux émis et reçus, un dispositif électronique d'amplification des signaux électriques reliant chaque récepteur à la diode de réémission correspondante de même longueur d'onde.

L'invention sera mieux comprise à la lecture de la description qui suit d'exemples de réalisation illustrés par les dessins annexés dans lesquels:

   – la Figure 1 est un schéma de principe d'un module émetteur-récepteur synthétisant l'état de la technique;

   – la Figure 2 est un schéma de principe d'un répéteur optique bi-directionnel conforme à l'invention;

   – la Figure 3 montre une vue externe d'un module émetteur-récepteur à deux voies;

   – la Figure 4 montre la disposition interne du module de la figure 3;

   – la Figure 5 montre un module complémentaire du module de la figure 4;

   – la Figure 6 montre schématiquement un répéteur optique constitué de deux modules émetteur-récepteur;

   – la Figure 7 montre schématiquement l'utilisation de deux modules communiquant par une fibre optique.

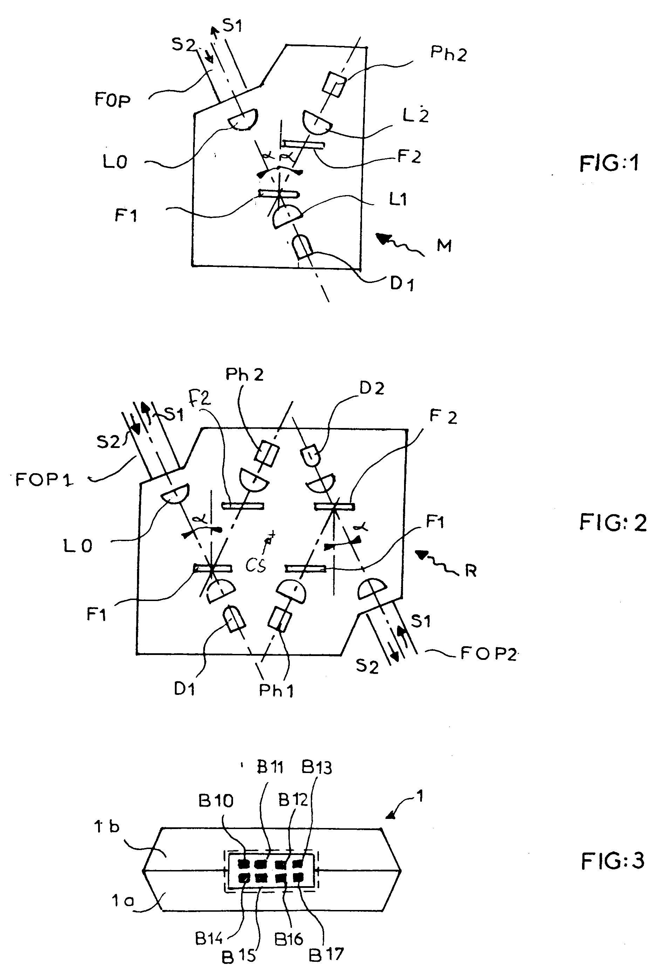

L'émetteur-récepteur M de signaux optiques représenté schématiquement en figure 1 est apte à émettre des signaux S1, de longueur d'onde Γ1, sur la fibre optique FOP et à recevoir des signaux S2, de longueur d'onde Γ2, transmis par la même fibre FOP.

Pour l'émission, le module M comporte une diode électroluminescente D1 dont le spectre d'émission est centré sur la longueur d'onde Γ1. Les rayons du faisceau émis sont rendus parallèles par une lentille convergente L1 interposée entre la diode D1 et un filtre dichroïque F1 laissant passer le rayonnement de longueur d'onde Γ1 et réfléchissant les autres rayonnements. Une lentille L0 focalise ensuite le faisceau sur l'extrémité de la fibre FOP. Les centres de la diode D1, de la lentille L1, du filtre F1 et de la lentille L0 sont alignés sur l'axe de connexion de la fibre FOP avec le module M. L'angle α représente l'incidence du faisceau lumineux sur le filtre F1.

Pour la réception le module M comporte un récepteur photo-électrique Ph2 placé derrière un filtre dichroïque F2 laissant passer le rayonnement de longueur d'onde Γ2 et réfléchissant les autres rayonnements. Les centres du filtre F2 et du récepteur Ph2 sont alignés avec le centre du filtre F1 selon la direction du faisceau provenant de la fibre FOP et réfléchi par le filtre F1. L'angle d'incidence sur F2 du faisceau porteur du signal S2 a donc également pour valeur α. Une lentille L2 focalise le faisceau sur le récepteur à sa sortie du filtre F2.

Afin de réduire l'encombrement total du module, il est intéressant d'utiliser les filtres avec une incidence α proche de 45°. Cependant, la réponse spectrale d'un filtre interférentiel est fortement perturbée pour des incidences supérieures à 25°. On a donc intérêt à fixer à 25° l'angle α pour obtenir un bon compromis entre compacité et diaphonies entre voies optiques adjacentes.

La structure du répéteur R de signaux optiques représenté schématiquement en figure 2 s'obtient en disposant deux modules conformes à celui de la figure 1 de façon symétrique à son centre CS et en inversant les longueurs d'onde Γ1 et Γ2 en effectuant la symétrie. Le répéteur connecte donc deux fibres optiques FOP1 et FOP2. La diode D1 émet un signal S1 de longueur d'onde Γ1 sur la fibre optique FOP1 et la diode D2 émet un signal optique S2 de longueur d'onde Γ2 sur la fibre optique FOP2. De même le récepteur Ph2 reçoit le signal optique S2 de la fibre FOP1 et un signal optique S1 de la fibre FOP2.

Les diodes D1, D2 et les récepteurs Ph1, Ph2 sont connectés à un dispositif électronique RE non représenté destiné à amplifier les signaux électriques captés par les récepteurs. Ainsi le le récepteur Ph1 transmet au dispositif RE un signal électrique fonction du signal optique S1 reçu via la fibre FOP2. Le dispositif RE amplifie ce signal qui excite la diode D1 laquelle émet un signal S1 vers la fibre FOP1. Il en est de même pour le signal S2 circulant dans le sens opposé à celui du signal S1.

On va maintenant décrire de façon plus détaillée un exemple de module émetteur-récepteur conforme à l'invention.

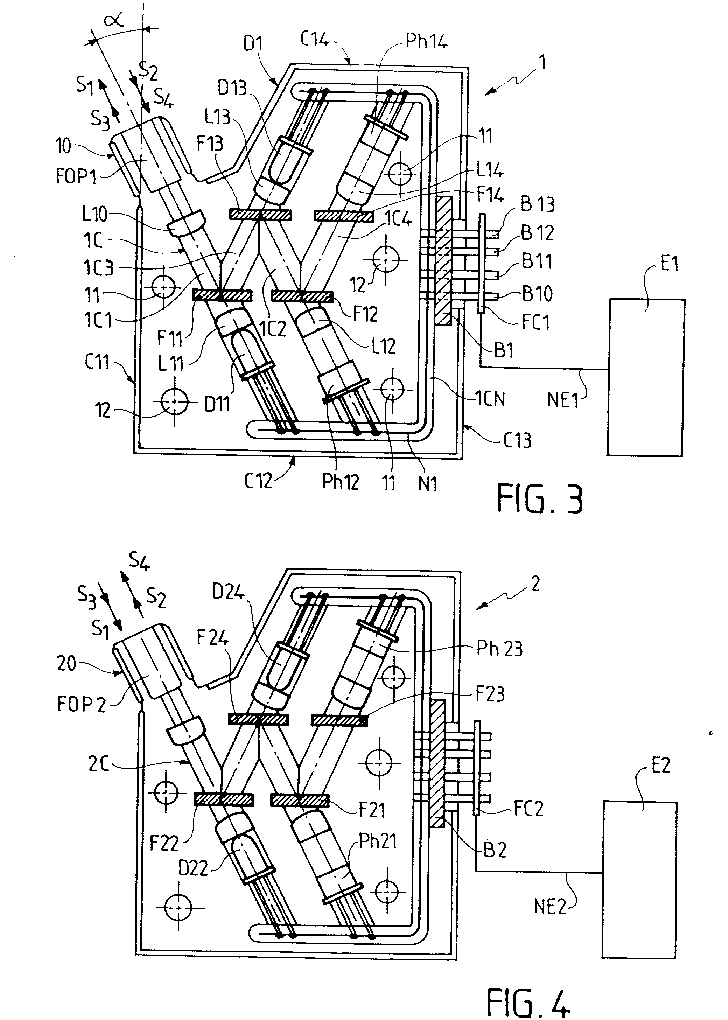

Comme on le voit à la figure 3, un module émetteur-récepteur bi-directionnel à deux voies de référence générale 1 est constitué d'un boîtier formé de deux demi-coquilles 1a, 1b symétriques par rapport à leur plan de jonction à l'exception des éléments assurant leur fixation réciproque.

Tel qu'on peut le voir à la figure 4, tous les composants du module se mettent en place dans des empreintes formées en creux dans la demi-coquille la avant fermeture par la demi-coquille 1b comportant des empreintes symétriques. Les deux demi-coquilles sont fixées l'une à l'autre par des vis non représentées passant par les orifices repérés 11 auxquels correspondent des trous taraudés de l'autre demi-coquille 1b. La fixation du module sur son support peut être effectuée par deux trous 12 le traversant de part en part.

Les entrées-sorties du module se font par une fibre optique FOP1 pour les signaux optiques et par une fiche de connexion B1 à huit broches B10-B17 pour les signaux électriques.

La fibre optique FOP1 est connectée sur une extrémité cylindrique 10 disposée à la limite d'un pan coupé P1 et d'un côté C11 du module dont la forme générale est rectangulaire.

L'extrémité 10 assure l'alignement de la fibre optique FOP1 sur l'axe de la première portion rectiligne 1C1 d'un canal optique 1C comportant quatre branches de section circulaire. L'axe de la branche 1C1 fait un angle a avec le côté adjacent du boîtier du module et un angle 2α avec le pan coupé P1.

A son extrémité opposée à la fibre optique FOP1 la branche 1C1 du canal 1C débouche dans une empreinte 1CN de section rectangulaire et se développant parallèlement aux trois côtés C12, C13, C14 du module. L'empreinte 1CN est destinée au logement d'une nappe à fils conducteurs N1 reliés d'une part respectivement à une des broches B10 à B17 d'une prise multibroches B1 et d'autre part par paire aux émetteurs ou aux récepteurs optiques.

En partant de l'empreinte 1CN, la branche 1C1 reçoit dans des empreintes adaptées à la forme de chaque élément optique une diode électro-luminescente D11, une lentille L11 rendant parallèle le faisceau émis par D11, un filtre dichroïque F11 laissant passer les rayonnements lumineux de longueur d'onde $\Gamma1$ et réfléchissant tous les autres et une lentille L10.

Comme on le voit au dessin, les trois autres branches du canal 1C sont deux à deux parallèles et chacune débouche d'une part dans la branche adjacente et d'autre part dans l'empreinte 1CN.

D'une façon générale, chaque branche 1C2 à 1C4 reçoit en partant de l'empreinte 1CN un élément émetteur ou récepteur D1j ou Ph1j, une lentille L1j, un filtre dichroïque F1j. Les lentilles focalisent ou rendent parallèles les faisceaux lumineux selon le cas.

Dans le module décrit, il y a d'une part deux couples émetteurs D11, F11 et D13, F13 pour les longueurs d'onde $\Gamma1$ et $\Gamma3$ et d'autre part deux couples récepteurs Ph12, F12 et Ph14, F14 pour les longueurs d'onde $\Gamma2$ et $\Gamma4$. On peut bien sûr extrapoler à un plus grand nombre de couples émetteurs et récepteurs en conservant la même disposition générale et notamment à un module à huit longueurs d'onde permettant d'assurer une transmission correspondant à celle d'un bus multiplexé de microprocesseur.

Comme dans l'exemple représenté avec D11 et D13, on dispose les diodes électro-luminescentes au plus près de la fibre optique pour minimiser à l'émission le nombre de réflexions sur des filtres dichroïques avant d'atteindre la fibre optique.

Comme on le voit au dessin, les filtres dichroïques F11 à F14 sont disposés dans deux plans verticaux parallèles aux côtés C12, C14 du boîtier de façon que l'angle d'incidence des rayons lumineux reçus ou émis vers la fibre optique FOP1 ait pour valeur $\alpha$. Sauf le dernier filtre F14 disposé à l'extrémité du chemin optique opposée à la fibre FOP1, chaque filtre est disposé au confluent de deux branches adjacentes sécantes telles les branches 1C1 et 1C3.

Les broches B10-B17 sont reliées en fonctionnement à un dispositif électronique externe E1 par une fiche de connexion FC1 et une nappe électrique NE1.

Le fonctionnement du module va maintenant être décrit. La diode électro-luminescente D11 émet un signal modulé par un signal électrique élaboré par le dispositif électronique E1 et transmis par la nappe N1.

Le faisceau lumineux mis en forme par les lentilles L11 et L10 constitue un signal S1 de longueur d'onde $\Gamma1$ grâce au filtre F11 qui ne laisse passer que

la lumière de cette longueur d'onde. De la même façon, la diode D13 permet d'émettre vers la branche 1C3 un signal S3 de longueur d'onde $\Gamma3$ grâce au filtre F13. Au confluent des branches 1C3 et 1C1, le signal S3 est réfléchi par le filtre dichroïque F11 en direction de la lentille L10 qui focalise le faisceau sur l'entrée de la fibre FOP1.

Inversement les signaux S2 et S4 de longueurs d'onde respectives $\Gamma2$ et $\Gamma4$ provenant de la fibre FOP1 sont l'un et l'autre réfléchis par les filtres F11 et F13.

Le signal S4 est réfléchi par le filtre F12 qui laisse par contre passer le signal S2 qui est focalisé par la lentille L12 sur le récepteur photo-électrique Ph12. Finalement le signal S4 traverse le filtre F14 et il est focalisé sur le récepteur photo-électrique Ph14.

Les signaux électriques fournis par les récepteurs Ph12 et Ph14 sont transmis par les nappes N1 et NE1 au dispositif électronique E1.

La disposition qui vient d'être décrite évite les interactions entre émission et réception en séparant notamment les différentes voies optiques. Le spectre d'émission des diodes électro-luminescentes étant large, le flux émis par chacune non transmis par le filtre associé est réfléchi sans pouvoir atteindre un récepteur ce qui engendrerait une erreur systématique qu'il faudrait pallier par une correction électronique. On notera en outre que les voies en émission sont à cet effet placées près de l'arrivée de la fibre optique alors que les récepteurs occupent les positions les plus éloignées.

Enfin, afin de diminuer la diaphonie entre voies optiques de même sens, les longueurs d'onde d'émission sont choisies de façon à imbriquer les voies "aller" et les voies "retour" avec la relation $\Gamma4 > \Gamma3 > \Gamma2 > \Gamma1$.

On rend ainsi négligeable le recouvrement en spectre de deux voies optiques adjacentes. C'est ainsi que le signal S4 réfléchi successivement par les filtres F11, F13, F12 avant d'atteindre le récepteur Ph14 à travers le filtre F14 ne peut que très faiblement perturber le récepteur Ph12.

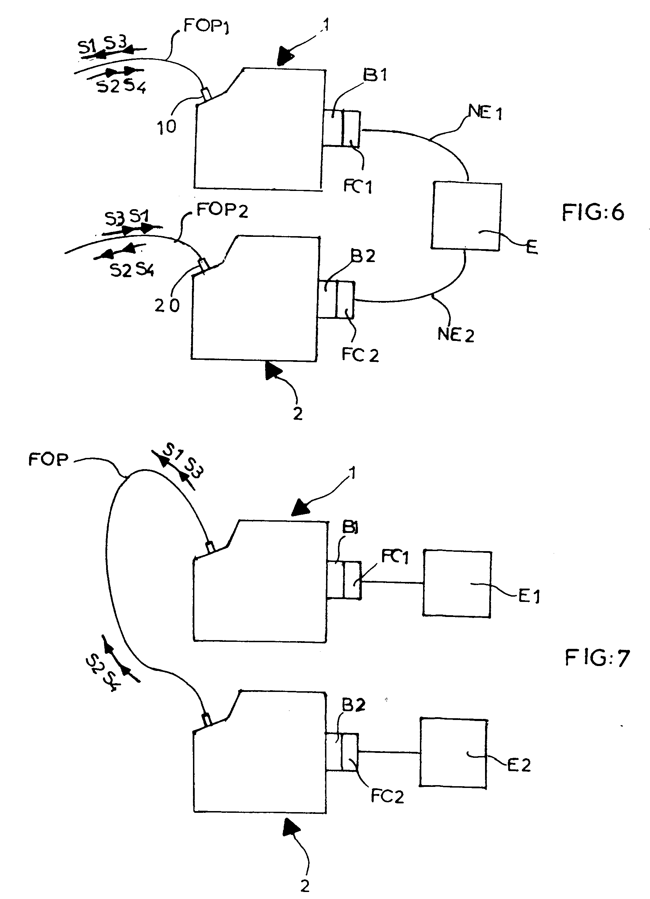

Le module 2 représenté en figure 5 est identique au module 1 de la figure 4 à la disposition des filtres près et au choix des diodes D22 et D24. Le filtre F22 identique au filtre F12 laisse passer le rayonnement de longueur d'onde $\Gamma2$ et est disposé à la place du filtre F11 du module 1.

De la même façon, les filtres F24, F23 et F21 remplacent respectivement les filtres F13, F14 et F12. D'une façon générale, dans les indices ij le premier indice i (1 ou 2) représente le type de module et le deuxième j (de 1 à 4), la longueur d'onde concernée.

Il est clair que le module de type 2 est apte à émettre des signaux S2 et S4 de longueurs d'onde $\Gamma2$ et $\Gamma4$ et à recevoir des signaux S1 et S3 de longueurs d'onde $\Gamma1$ et $\Gamma3$.

Tels qu'associés à la figure 6, un module de type 1 et un module de type 2 forment un répéteur optique bi-directionnel à quatre voies dont le fonctionnement est semblable à celui représenté schématiquement à la figure 2.

Les modules 1 et 2, respectivement reliés par leurs sorties optiques 10 et 20 aux fibres optiques FOP1 et FOP2, sont d'autre part connectés entre eux par un système électronique externe E à l'aide de deux nappes électriques NE1 et NE2 à huit conducteurs munies de fiches de connexion FC1 et FC2 avec les broches B1 et B2.

Le dispositif électronique E reçoit les signaux optiques captés par les détecteurs photo-électriques des modules 1 et 2 et les amplifie pour alimenter les diodes électro-luminescentes correspondantes de l'autre module. C'est ainsi que, par exemple, le signal S1 parvenant au module 2 par la fibre FOP2 est détecté par le détecteur Ph21. Le signal électrique correspondant est amplifié par le dispositif électronique E et appliqué à la diode électro-luminescente D11 qui émet vers la fibre FOP1 un signal optique correspondant S1 de longueur d'onde $\Gamma$1 après passage du filtre F11.

L'ensemble de la figure 6 constitue donc bien un répéteur optique bi-directionnel recevant par la fibre FOP2 des signaux optiques S1, S3 qui sont renvoyés amplifiés sur la fibre FOP1 et par la fibre FOP1 des signaux optiques S2, S4 qui sont renvoyés amplifiés sur la fibre FOP2.

Dans l'application représentée à la figure 7, les deux modules 1 et 2 sont utilisés pour faire dialoguer deux dispositifs électroniques E1 et E2 reliés aux broches B1 et B2, les deux modules étant reliés par une même fibre optique FOP.

Le dispositif E1 génère des signaux électriques qui transitent vers le dispositif E2 sous forme de signaux optiques S1, S3 émis par les diodes D11 et D13. Inversement le dispositif E2 génère vers E1 des signaux transitant vers le dispositif E1 sous forme de signaux optiques S2 et S4 émis par les diodes D22 et D23 associées aux filtres F22 et F23.

## Revendications

1. Module émetteur-récepteur de signaux optiques transmis par au moins une fibre optique, comportant des filtres interférentiels ou dichroïques pour séparer les radiations lumineuses de longueurs d'onde différentes, caractérisé en ce qu'il comporte des moyens pour émettre au moins deux signaux optiques (S1,S3) et recevoir au moins deux signaux optiques (S2,S4) de longueurs d'onde différentes sur une même fibre optique, ($\Gamma$1,$\Gamma$3) pour les signaux émis (S1,S3) et ($\Gamma$2,$\Gamma$4) pour les signaux reçus (S2,S4), ces moyens comprenant au moins:

   – pour l'émission deux diodes électro-luminescentes (D11,D13) de spectres centrés sur ($\Gamma$1,$\Gamma$3) et deux filtres dichroïques (F11,F13) laissant passer les radiations de longueur d'onde ($\Gamma$1,$\Gamma$3) et réfléchissant les autres;
   – pour la réception deux récepteurs photo-électriques (Ph12,Ph14), respectivement associés à des filtres dichroïques (F12,F14) laissant passer les radiations de longueurs d'ondes ($\Gamma$2,$\Gamma$4) et réfléchissant les autres;
   – les trajets optiques de trois de ces signaux (S2,S3,S4) comportant une réflexion sur au moins un filtre dichroïque laissant passer l'un des trois autres signaux.

2. Module émetteur-récepteur selon la revendication 1, caractérisé en ce que les filtres interférentiels (F11,F12, F13,F14) en nombre pair sont partagés en deux groupes égaux disposés dans deux plans parallèles de sorte que le chemin optique du faisceau lumineux provenant de la fibre (FOP) passe alternativement d'un plan à l'autre par réflexions successives.

3. Module émetteur-récepteur selon la revendication 1 ou la revendication 2, caractérisé en ce que l'angle d'incidence $\alpha$ des signaux optiques sur les filtres (F11,F12) est voisin de 25°.

4. Module émetteur-récepteur selon l'une quelconque des revendications précédentes, caractérisé en ce que les diodes électro-luminescentes (D1,Dij) occupent les positions les plus proches de la fibre optique (FOP) alors que les récepteurs (Ph2,Phij) occupent les positions les plus éloignées de la fibre optique (FOP).

5. Module émetteur-récepteur selon l'une quelconque des revendications précédentes, caractérisé en ce qu'il comporte au moins deux voies d'émission de signaux (S1,S3) de longueurs d'onde ($\Gamma$1,$\Gamma$3) et le même nombre de voies de réception de signaux (S2,S4) de longueurs d'onde ($\Gamma$2,$\Gamma$4), les longeurs d'onde étant choisies de façon à imbriquer les longueurs d'onde des voies d'émission et de réception avec la relation $\Gamma$4 > $\Gamma$3 > $\Gamma$2 > $\Gamma$1.

6. Module émetteur-récepteur selon l'une quelconque des revendications précédentes, caractérisé en ce que les diodes électro-luminescentes (Dij), les filtres dichroïques (Fij), les récepteurs photo-électriques (Phij), les lentilles (Lij) sont maintenus en place dans des empreintes formées en creux dans deux demi-coquilles (1a,1b) ou (2a,2b) formant le boîtier du module.

7. Module émetteur-récepteur selon la revendication 6, caractérisé en ce que les signaux optiques se propagent dans un canal (1C ou 2C) ménagé en creux à l'intérieur des deux demi-coquilles et comportant une branche (1C1-1C4) ou (2C1-2C4) rectiligne pour chaque voie d'émission ou de réception.

8. Module émetteur-récepteur selon la revendication 7, caractérisé en ce que chaque branche (1C1-1C4,2C1-2C4) possède d'une part un confluent avec au moins une branche adjacente et débouche d'autre part dans une empreinte (1CN) destinée au logement d'une nappe à fils conducteurs (N1) reliée d'une part à une prise multibroche (B1) et d'autre part par paire aux émetteurs (D11,D13 ou D22,D23) et aux récepteurs (Ph12,Ph14 ou Ph21,Ph23).

9. Répéteur optique bi-directionnel à plusieurs voies comportant deux modules émetteur-récepteur (1,2) conforme à l'une quelconque des revendications précédentes, ne différant l'un de l'autre que par l'inversion des longueurs d'onde des signaux émis et reçus, un dispositif électronique (E) d'amplification des signaux électriques reliant chaque récepteur (Ph1i ou Ph2i) à la diode de réémission correspondante (D1i ou D2i) de même longueur d'onde.

10. Répéteur selon la revendication 9, caractérisé en ce que les deux modules émetteur-récepteur (1,2) sont disposés dans deux boîtiers séparés de structure identique reliés par un dispositif électronique (E) respectivement connectés à des fibres optiques (FOP1) et (FOP2).

FIG:1

FIG:2

FIG:3

FIG. 3

FIG. 4

FIG:6

FIG:7

Office européen
des brevets

# RAPPORT DE RECHERCHE EUROPEENNE

Numero de la demande

EP    91 40 3087

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | DE-A-3 546 082 (ANT) | 1,2,4 | H04B10/24 |
| A | * abrégé; figure 1 * | 6 | G02B6/42 |
| | --- | | |
| X | PATENT ABSTRACTS OF JAPAN vol. 11, no. 293 (P-619)(2740) 22 Septembre 1987 & JP-A-62 089 008 ( NEC ) 23 Avril 1987 | 1,4 | |
| A | * abrégé * | 2,6 | |
| | --- | | |
| X | PATENT ABSTRACTS OF JAPAN vol. 11, no. 395 (P-650)(2842) 24 Décembre 1987 & JP-A-62 159 105 ( HITACHI ) 15 Juillet 1987 | 1,4 | |
| A | * abrégé * | 2,5 | |
| | --- | | |
| X | PATENT ABSTRACTS OF JAPAN vol. 10, no. 76 (P-440)(2133) 26 Mars 1986 & JP-A-60 214 316 ( HITACHI ) 26 Octobre 1985 | 1,3 | |
| A | * abrégé * | 2,5 | |
| | --- | | |
| X | US-A-4 790 614 (IMOTO ET AL) | 1 | |
| A | * colonne 5, ligne 22 - colonne 6, ligne 40; figures 5A-9 * | 2,4 | **DOMAINES TECHNIQUES RECHERCHES (Int. Cl.5 )** |
| | --- | | |
| A | EP-A-0 205 359 (THOMSON-CSF) * colonne 6, ligne 5 - ligne 33 * * colonne 9, ligne 5 - ligne 12; figures 4-9 * | 1,3,6-8 | H04B H04J H04Q G02B |
| | --- | | |
| A | FR-A-2 525 050 (JEUMONT-SCHNEIDER) * page 13, ligne 28 - page 14, ligne 32; figure 9 * | 9 | |
| | ----- | | |

Le présent rapport a été établi pour toutes les revendications

| Lieu de la recherche | Date d'achèvement de la recherche | Examinateur |
|---|---|---|
| LA HAYE | 06 FEVRIER 1992 | GOUDELIS M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P0402)